# EUROPEAN PATENT APPLICATION

(11) **EP 2 623 408 A1**
(43) Date of publication of application: **07.08.2013**
(21) Application number: 11817807.8
(22) Date of filing: 16.08.2011
(51) Int. Cl.: B62M 1/10

(54) **DEVICE FOR TRANSMITTING DIRECT PROPULSION FORCE FOR BICYCLES AND PEDAL VEHICLES**

(30) Priority: 17.08.2010 ES 201030867
(71) Applicant: Petsios, Maria Ines, 46007 Valencia (ES); Velasquez, Nicolas Roberto, 46007 Valencia (ES)
(72) Inventor: Petsios, Maria Ines, 46007 Valencia (ES); Velasquez, Nicolas Roberto, 46007 Valencia (ES)
(74) Representative: Chanza Jordan, Dionisio
(86) International application number: PCT/ES2011/070598
(87) International publication number: WO 2012/022820

(57) **Abstract**

The invention relates to a device for transmitting human pedal power or human power combined with other driving forces (electric, combustion, wind, etc.) for bicycles and vehicles, which increases and multiplies user propulsion, resulting in more power and less effort by means of a running drive wheel through the arrangement of parts with an interplay of axially powered continuous traction and compression. Essentially, the interplay of forces is distributed and organized by means of a multiplier disc (5), a traction screw (6), a compression screw (7) and a toothed base plate (10). Said multiplier disc (5) contains a free transverse indent (8), several oscillation indents (9), free indents (21), an attachment indent (22), a cutback indent in the traction gear (14) and a cutback indent in the compression gear (15), which provides the exact space for a traction gear (16) and a compression gear (17), respectively.

## Description

### Technical sector

The invention protected by this patent consists of a transmission device for bicycles and pedal vehicles which increases and multiplies the user's propulsion force by means of a running drive wheel through the arrangement of parts with an interplay of axially powered continuous traction and compression.

### Prior art

Nowadays and since historical times, various pedal vehicles are known and used with devices based on the use of a simple running drive wheel with a toothed disc with transmission of movement by a chain moved by pedals. This simple, effective system has been a usual form of transport by land and even by sea and inland waters both for purposes of transporting its users and for recreational purposes.

However, physical resistance to the movement is offered by various factors, both internal (the weight of the driver-user, loads, other passengers, the weight of the bicycle or pedal vehicle, etc.) and external (the gradient of the terrain, terrain type, wind, etc.). Together with the need to travel medium and long distances, this requires efficiency and optimum use of the physical force exercised by the user who is really acting as a traction engine.

For this reason, various solutions have been proposed all over the world and throughout history of very different kinds and with varying results: assistance by an electric motor or combustion engine, including sails to take advantage of wind force, adding further tractor-users in tandem, among other possibilities. However, the most important qualitative leap in the development of bicycles as the main type of pedal vehicles occurred with the inclusion of gear changes in the front and rear discs of the two wheels, in order to make the best use of the physical force of the tractor-user according to his own circumstances and external factors during travel.

In the same way, in places where pedal vehicles are very common, widespread means of transport, ingenious alterations to the traditional pedal-chain-wheel transmission system have been proposed, such as the Chinese patents with publication number CN101480989 DONGPING HAN (2009) about a crossed arrangement of parallel and transverse connecting rods in a Z shape, or lightening the bicycle frame itself as in patent CN201209012 JINQUAN MA (2009). Both of these are intended to save labour during manufacturing and assembly, or patent CN2652784 JIANG MINPING (2004) related with a set of two chains in order to double the propulsion force.

### Technical problem

The use of bicycles or cycles with one or more wheels and pedal vehicles with or without artificial propulsion elements (electric batteries, combustion engines, etc.) is well developed and widespread as a means of individual or collective transport. However, the propulsion force the user needs to apply is very varied and responds to highly varying factors such as air resistance, the resistance of gravity in relation to the angle of the terrain as in slopes or gradients and descents, and especially the resistance inherent to the interactive friction of the gears in these vehicles.

All of this hampers speed, the user's force and the weight and load capacity used, sometimes making the progress of these vehicles impossible because of the prevalence of these resistances.

### Technical solution

With the aim of overcoming the problem of resistances in general and specifically the resistance caused by the actual gears of pedal vehicles, a device is presented for transmission of the propulsion force applied by the driver directly or helped by external means (an electric motor or combustion engine) through the combination of two or three means: a connecting rod, a toothed disc and possibly a power multiplier disc between them.

So the resistances to the propulsion force are partly neutralized by interplay of forces or constant compression and traction stresses. This involves a drive wheel which distributes these stresses in a constant, controlled way, favouring the direct propulsion force applied by the tractor-user. This removes the need for gear changes by various toothed discs of different diameters and the transmission chain between them.

Consequently, the axial force of the connecting rod pivot acting as a fulcrum or support point distributes the power-resistance ratio through the arrangement and shape of the device without a multiplier disc or in the case of a multiplier disc and transmission parts which by constant, balanced compression neutralizes part of the resistance and releases part of the power.

### Beneficial effects

The main advantages include but are not limited to the following:
- Saving in the propulsion force of human traction.
- Increased power in relation to the resistance of road surfaces on sloping or rising ground.
- Greater speed on flat ground or straight roads.
- Energy efficiency and less fatigue for the driver-user compared with traditional, basic devices.

### Description of the figures

To allow better understanding of the aforementioned general features, several drawings of this invention are included, showing the following:

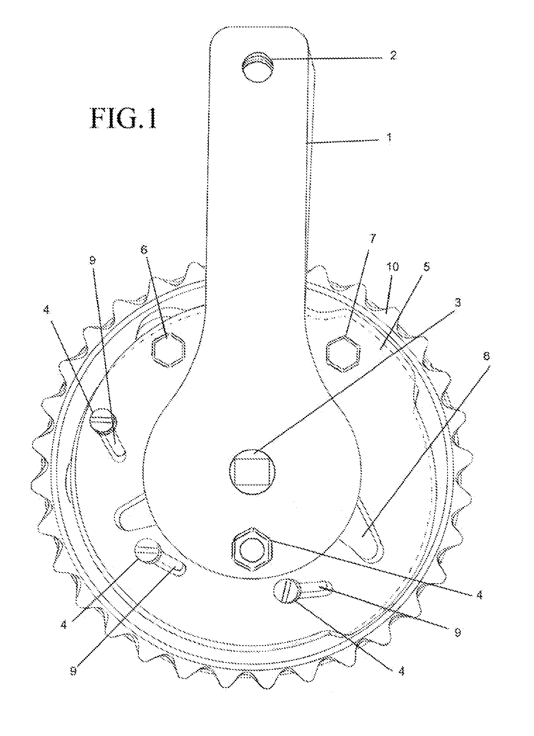

**Figure 1****:** Front obverse view of a set consisting of a one-screw connecting rod (**1**), a pedal thread (**2**), a central shaft indent (**3**), a attachment screw (**4**), a multiplier disc (**5**), a traction screw (**6**), a compression screw (7), a free transverse indent (**8**), several oscillation indents (**9**), and a toothed base plate (**10**).

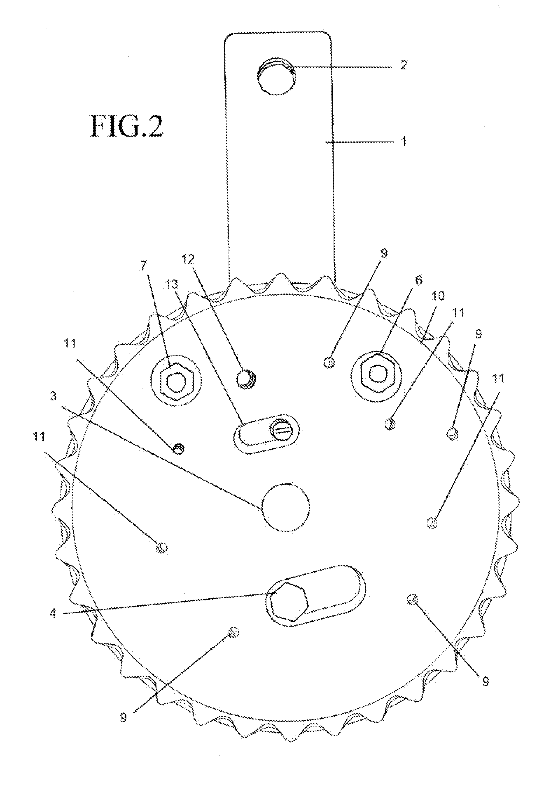

**Figure 2****:** Front back view of a set consisting of a one-screw connecting rod (**1**), a pedal thread (**2**), a central shaft indent (**3**), a attachment screw (**4**), a traction screw (**6**), a compression screw (**7**), several oscillation indents (**9**), a toothed base plate (**10**), several gear attachment indents (**11**), a secondary shaft pin-screw (**12**) and its corresponding holding nut (**13**).

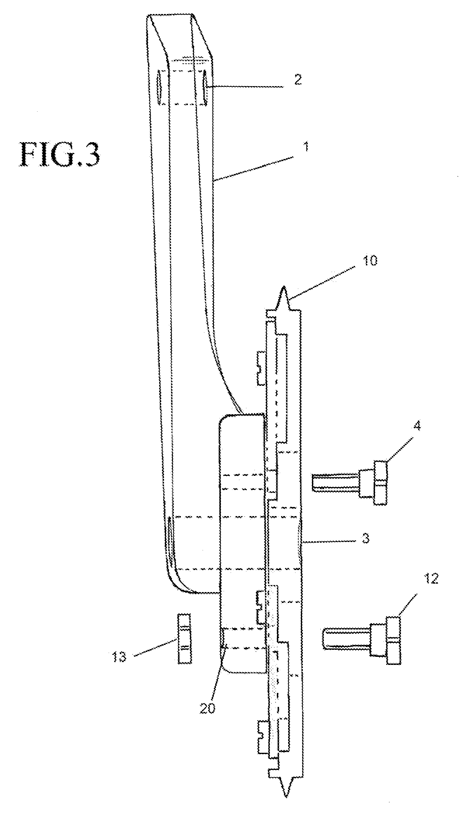

**Figure 3****:** Side view of a set consisting of a one-screw connecting rod (**1**), a pedal thread (2), a central shaft indent (**3**), several attachment screws (**4**), a toothed base plate (**10**), a secondary shaft pin indent (**20**) with a secondary shaft pin-screw (**12**) and its corresponding holding nut (**13**).

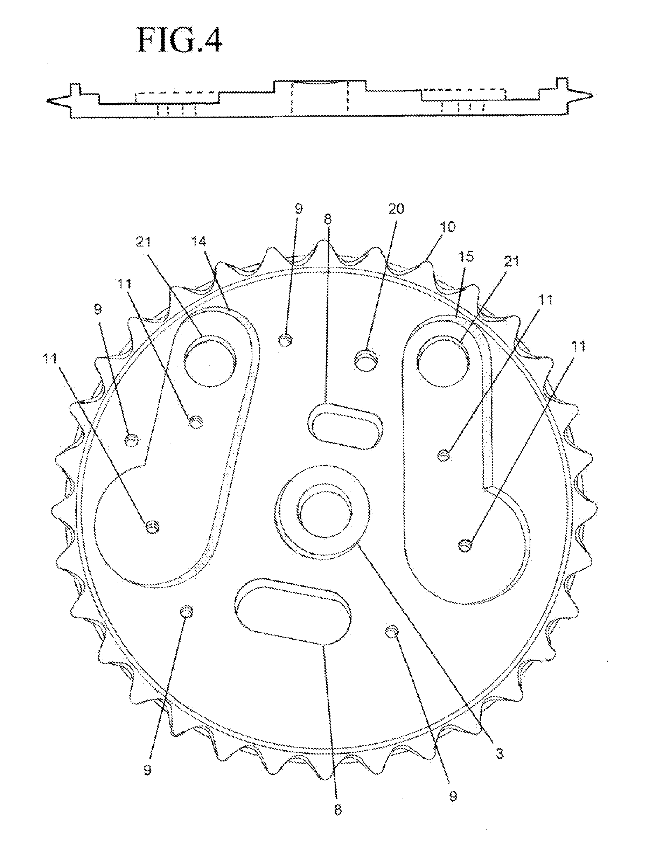

**Figure 4****:** Front and side views of a toothed base plate (**10**) with a central shaft indent (**3**), free indents (**21**), oscillation indents (**9**), gear attachment indents (**11**), a cutback indent in the traction gear (**14**), a cutback indent in the compression gear (**15**), and a secondary shaft pin indent (**20**).

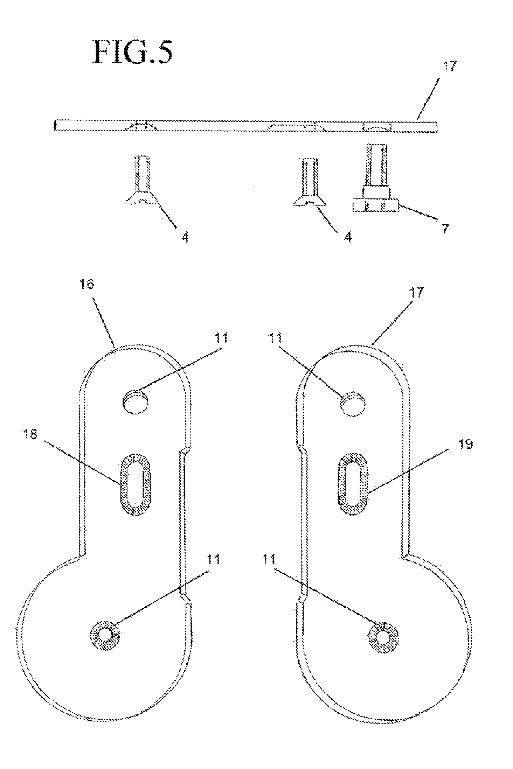

**Figure 5****:** Front and side views of a traction gear (**16**) and a compression gear (**17**), a traction gear holder centre (**18**), and a compression gear holder centre (**19**) with several gear attachment indents (**11**); with a detailed side view of the compression gear (**17**) and its compression screw (**7**) and attachment screws (**4**).

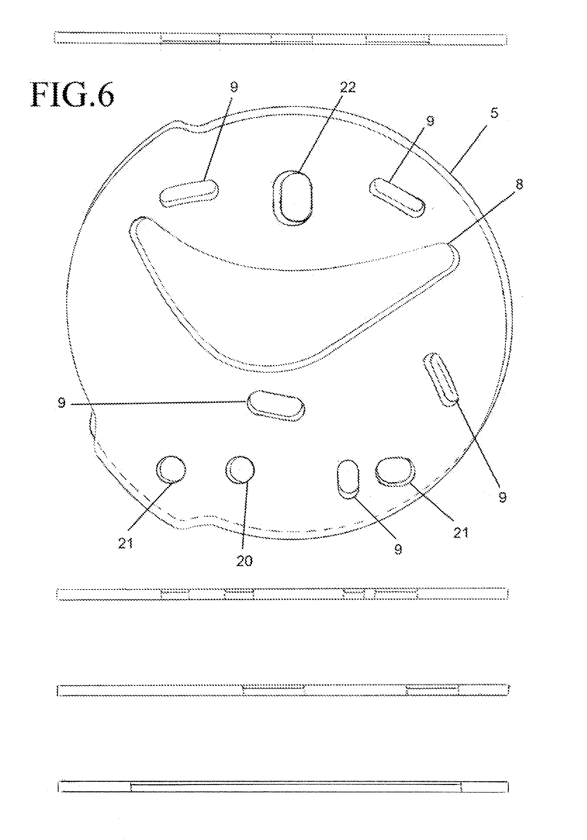

**Figure 6****:** Front and side views of a multiplier disc (**5**), a attachment indent (**22**), a free transverse indent (**8**), several oscillation indents (**9**), a secondary shaft pin indent (**20**) and free indents (**21**).

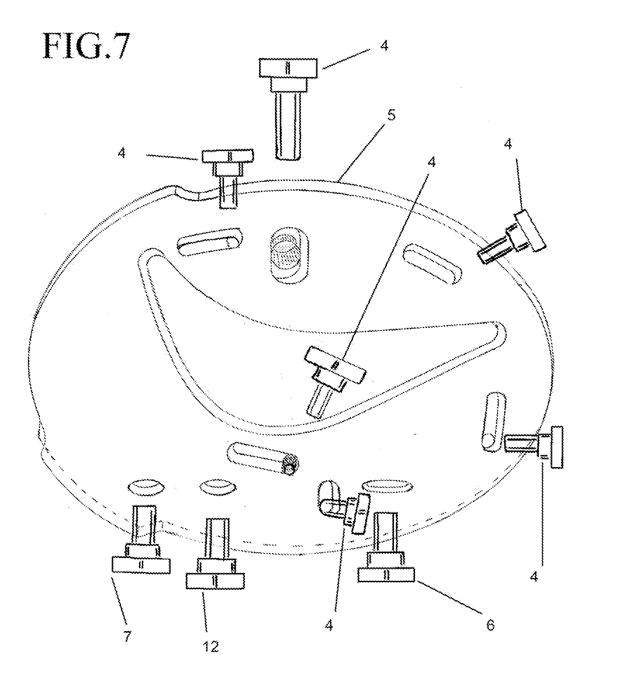

**Figure 7****:** Front view of a multiplier disc (**5**) with its screws, consisting of several attachment screws (**4**), a traction screw (**6**), a compression screw (**7**), and a secondary shaft pin-screw (**12**).

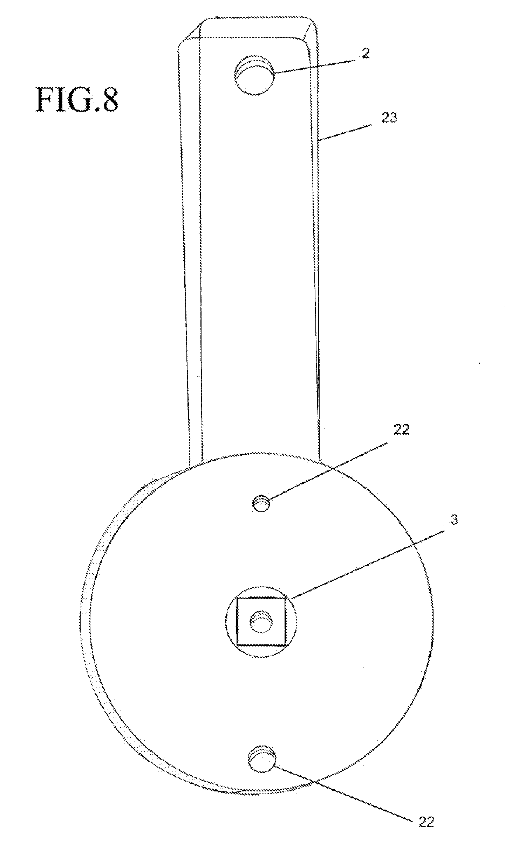

**Figure 8****:** Front view of a double-screw connecting rod (**23**), with a pedal thread (**2**), a central shaft indent (**3**), and several fastening holes (**22**).

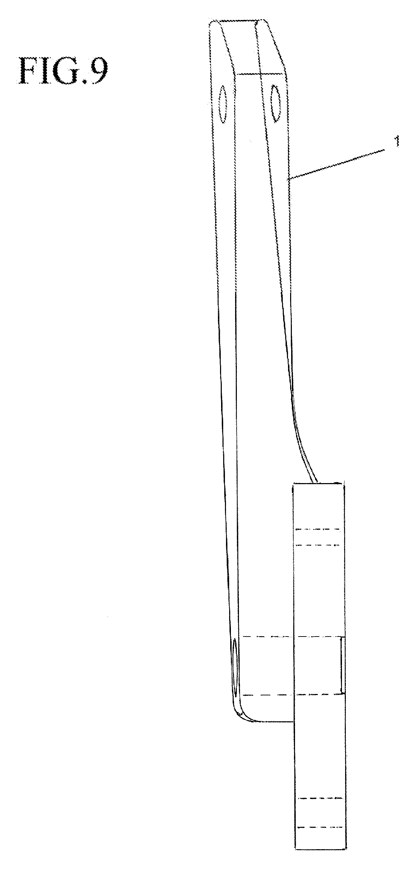

**Figure 9****:** Side view of a connecting rod (**1**).

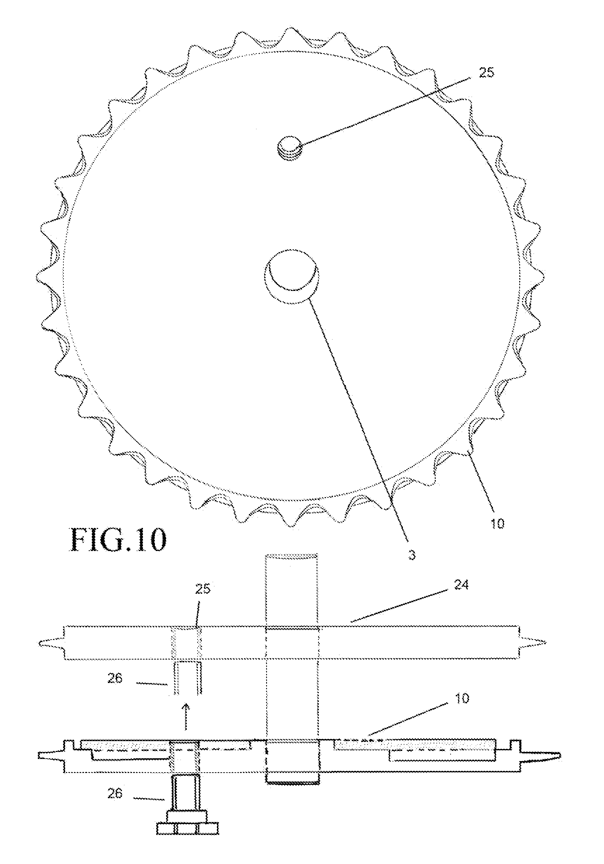

**Figure 10****:** Front and side views of a set consisting of a toothed base plate (**10**), with a second, parallel auxiliary toothed plate (**24**), with its central shaft indent (**3**), its connection screw indent (**25**), and a connection screw (**26**) which goes through both plates.

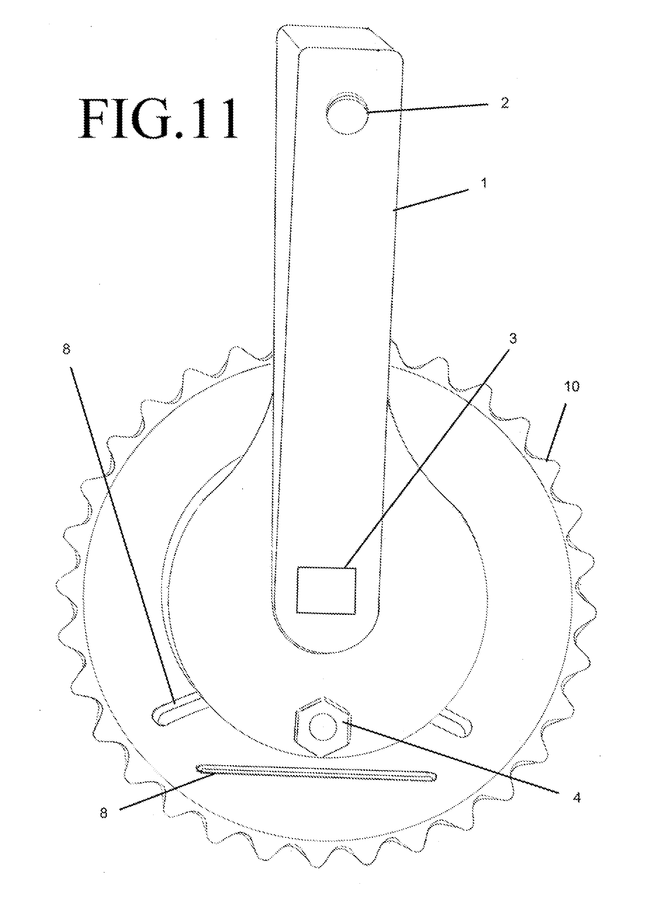

**Figure 11****:** Front obverse view of a set consisting of a one-screw connecting rod (**1**), a pedal thread (**2**), a central shaft indent (**3**), a attachment screw (**4**), a free transverse indent (**8**), and a toothed base plate (**10**).

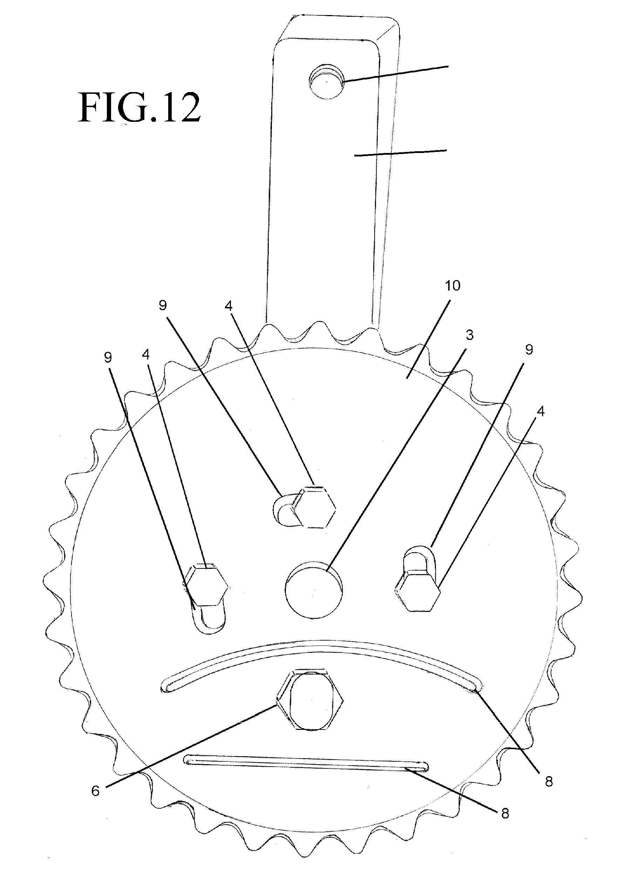

**Figure 12****:** Front view of the back of a set consisting of a one-screw connecting rod (**1**), a pedal thread (**2**), a central shaft indent (**3**), several attachment screws (**4**), a traction screw (**6**), a free transverse indent (**8**), an oscillation indent (**9**), and a toothed base plate (**10**).

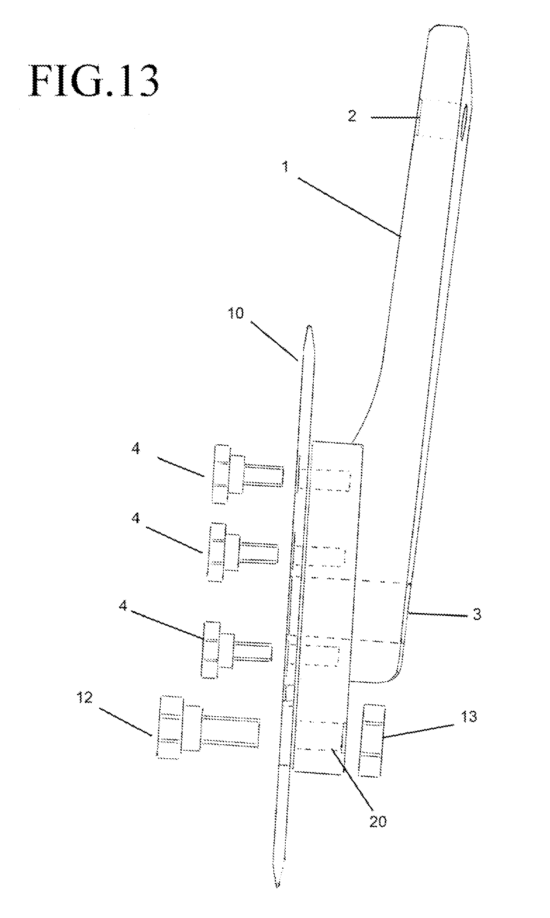

**Figure 13****:** Side view of a set consisting of a one-screw connecting rod (**1**), a pedal thread (**2**), a central shaft indent (**3**), several attachment screws (**4**), a toothed base plate (**10**), a secondary shaft pin indent (**20**) with a secondary shaft pin-screw (**12**) and its corresponding holding nut (**13**).

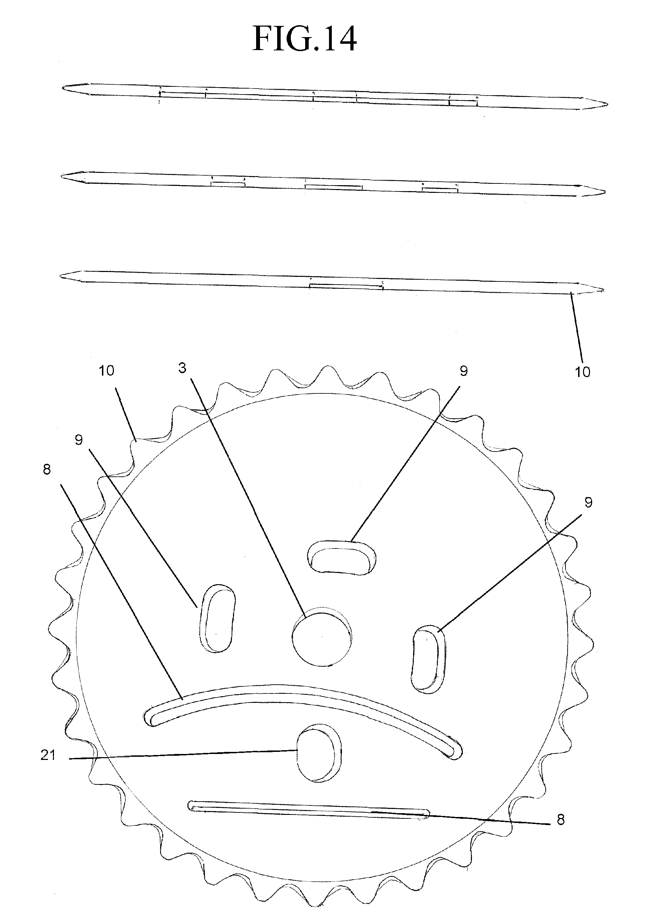

**Figure 14****:** Front and side views in different planes of a toothed base plate (**10**) with a central shaft indent (**3**), free transverse indents (**8**), and several oscillation indents (**9**), and a free indent (**21**).

### Preferred embodiment

The device for transmission of direct propulsion force for bicycles and vehicles powered by pedal alone or in combination with other means of propulsion can be made and arranged as follows, on the principal basis of three bodies: a connecting rod (**1**), a multiplier disc (**5**) and a toothed base plate (**10**).

There is a one-screw connecting rod (1), a pedal screw (2), which receives the force of the human traction, a central pin shaft indent (3), several attachment screws (4) through the three main bodies, a multiplier disc (5), a traction screw (6) which applies said force, a compression screw (7) which applies said force correspondingly, a free transverse indent (8), several oscillation indents (9) and a toothed base plate (10).

In the aforesaid multiplier disc (5), a cutback indent in the traction gear (14) and a cutback indent in the compression gear (15) provide the exact space for a traction gear (16) and a compression gear (17), respectively. Both gears are jointly assembled with a traction screw (6) a compression screw (7), a traction gear holder centre (18), and a compression gear holder centre (19), correspondingly. There are also several gear attachment indents (**11**) to take various attachment screws (**4**) which go through the three main bodies.

The effect of the physical law of the lever allows a combined set of a power arm, a resistance arm, weight and free open spaces to distribute and share the resistance and increase the power in proportion. To a large extent, the forces' channels of communication are concentrated in the gears. These consist of the following elements and function:
The traction gear, which applies the deformation force due to stretching and which is related with the following parts: a traction gear (**16**), a traction screw (6), a cutback indent in the traction gear (**14**) and attachment indent in said gear (**11**) with several attachment screws (**4**).
The compression gear which delays the force or tension and which consists of the following parts: a compression gear (**17**), a compression screw (**7**), a cutback indent in the compression gear (**15**) and attachment indent in said gear (**11**) with several attachment screws (**4**).

In addition, the traction and compression forces in the whole device, channelled by these gears, converge in the secondary shaft-pin screw (**12**), in which there is a secondary shaft pin indent (**20**) and which is closed by its corresponding locking nut (**13**) where they are in three functionally joined superimposed planes.

A multiplier disc (**5**) containing a attachment indent (**22**), a free transverse indent (**8**), several oscillation indents (**9**), a secondary shaft pin indent (**20**) and free indents (**21**) may be inserted between a connecting rod (**1**) and a toothed base plate (**10**).

In addition, other embodiments or variations may be produced according to the needs of the user, such as using a double-screw connecting rod (**23**) for greater reliability of propulsion, or a second, auxiliary parallel toothed plate (**24**), with its central shaft indent (**3**), its connecting screw indent (**25**), and a connection screw (**26**) through both plates, to enable greater power or for use in collective vehicles for more than two passengers.

In addition, the system can be simplified to a more elementary version, removing the insertion of the power multiplier disc (**5**) as another, alternative configuration. In this case, only a one-screw connecting rod (**1**), a pedal thread (**2**), a central shaft indent (**3**), a fastener screw (**4**), a free transverse indent (**8**) and a toothed base plate (**10**), a traction screw (**6**), a compression screw (**7**), an oscillation indent (**9**), a free indent (**21**) a secondary shaft pin indent (**20**) with a secondary shaft pin-screw (**12**) and its corresponding locking nut (**13**) would be used.

## Claims

1. A device for transmitting human pedal power or human power in combination with other driving forces which increases power and saves traction force, **characterized in that** it comprises a one-screw connection rod (**1**) a pedal thread (**2**), a central shaft pin indent (**3**) several attachment screws (**4**) a multiplier disc (**5**), a traction screw (**6**), a compression screw (**7**), a free transverse indent (**8**), several oscillation indents (**9**) and a toothed base plate (**10**). Said multiplier disc (**5**) consists of free indents (**21**), an attachment indent (**22**), a cutback indent in the traction gear (**14**) and a cutback indent in the compression gear (**15**), which provide the exact space for a traction gear (**16**) and a compression gear (**17**), respectively. The two gears are jointly assembled by a traction screw (**6**) and a compression screw (**7**), a traction gear holder centre (**18**), and a compression gear holder centre (**19**), correspondingly. There are also several gear attachment indents (**11**) to take various attachment screws (**4**). Said one-screw connecting rod (**1**), multiplier disc (**5**), and toothed base plate (**10**) are in three superimposed planes functionally joined together by a secondary shaft pin-screw (**12**) with a secondary shaft pin indent (**20**) and fastened by its corresponding locking nut (**13**).

2. A device for transmitting human pedal power or human power for bicycles and pedal vehicles alone or in combination with other driving forces which increases power and saves traction force and for reliability of propulsion according to Claim.1, **characterized in that** it includes a double-screw connecting rod (**23**).

3. A device for transmitting human pedal power or human power for bicycles and pedal vehicles alone or in combination with other driving forces which increases and doubles power, saves traction force, gives reliability of propulsion or can be used in collective pedal transport means according to Claims 1 and 2, **characterized in that** it includes a second, auxiliary, parallel, toothed plate (**24**), with a central shaft indent (**3**), connection screw indent (**25**) and connection screw (**26**) running through both plates.

4. A device for transmitting human pedal power or human power in combination with other driving forces which increases power and saves traction force, **characterized in that** it comprises a one-screw connection rod (**1**) a pedal thread (**2**), a central shaft pin indent (**3**), an attachment screw (**4**), a free transverse indent (**8**), and a toothed base plate (**10**), traction screw (**6**), a compression screw (**7**), a free transverse indent (**8**), an oscillation indent (**9**), a free indent (**21**), with a secondary shaft pin indent (**20**) and a secondary shaft pin-screw (**12**) and its corresponding locking nut (**13**).

5. A device for transmitting human pedal power or human power for bicycles and pedal vehicles alone or in combination with other driving forces which increases power and saves traction force and for reliability of propulsion according to Claim 4, **characterized in that** it includes a double-screw connecting rod (**23**)**.**

6. A device for transmitting human pedal power or human power for bicycles and pedal vehicles alone or in combination with other driving forces which increases and doubles power, saves traction force, gives reliability of propulsion or can be used in collective pedal transport means according to Claims 4 and 5, **characterized in that** it includes a second, auxiliary, parallel, toothed plate (**24**), with a central shaft indent (3), connection screw indent (**25**) and connection screw (**26**) running through both plates.

7. A device for transmitting human pedal power or human power for bicycles and pedal vehicles alone or in combination with other driving forces which increases and doubles power, saves traction force, gives reliability of propulsion or can be used in collective pedal transport means according to Claims 1, 2, 3, 4, 5 and 6, **characterized in that** it includes a bearing inserted in its central shaft indent (**3**), held by two to four nuts and their attachment screws.
